# FASCICULE DE BREVET EUROPEEN

(11) **EP 2 167 514 B1**
(45) Date de publication et mention de la délivrance du brevet: **27.06.2012**
(21) Numéro de dépôt: 08826350.4
(22) Date de dépôt: 08.07.2008
(51) Int. Cl.: C07F 9/40

(54) **PROCEDE AMELIORE DE PREPARATION D'ALCOXYAMINES ISSUES DE NITROXYDES BETA-PHOSPHORES**
VERBESSERTES VERFAHREN ZUR HERSTELLUNG VON ALKOXYAMINEN AUS BETA-PHOSPHORIERTEN NITROXIDEN
IMPROVED PROCESS FOR PREPARING ALKOXYAMINES RESULTING FROM BETA-PHOSPHORATED NITROXIDES

(30) Priorité: 09.07.2007 FR 0756339
(43) Date de publication de la demande: 31.03.2010
(73) Titulaire: ARKEMA FRANCE, 92700 Colombes (FR)
(72) Inventeur: COUTURIER, Jean-Luc, F-69006 Lyon (FR)
(74) Mandataire: Albani, Dalila
(86) Numéro de dépôt international: PCT/FR2008/051277
(87) Numéro de publication internationale: WO 2009/010693

(56) Documents cités:
- EP-B1- 1 527 079
- ANANCHENKO, GENNADY ET AL: "Controlled/Living Radical Polymerization of tert-Butyl Acrylate Mediated by Chiral Nitroxides. A Stereochemical Study" MACROMOLECULES , 35(22), 8323-8329 CODEN: MAMOBX; ISSN: 0024-9297, 2002, XP002468336
- ANANCHENKO, GENNADY ET AL: "Diastereomeric excess upon cleavage and reformation of diastereomeric alkoxyamines" ORGANIC & BIOMOLECULAR CHEMISTRY , 2(5), 709-715 CODEN: OBCRAK; ISSN: 1477-0520, 2004, XP002407647 -& ANANCHENKO ET AL: "Electronic Supplementary Information for Organic & Biomolecular Chemistry- Paper b313990e" ORGANIC & BIOMOLECULAR CHEMISTRY, [Online] 2004, pages 1-6, XP002468338 Extrait de l'Internet: URL:http://www.rsc.org/suppdata/ob/b3/b313 990e/> [extrait le 2008-02-11]

## Description

### Domaine technique

La présente invention a pour objet un procédé amélioré de préparation d'alcoxyamines issues de nitroxydes β-phosphorés par réaction avec un dérivé halogéné en présence d'un système organométallique, en milieu solvant organique miscible à l'eau. Ces alcoxyamines sont utilisables notamment comme amorceurs des polymérisations radicalaires.

Les alcoxyamines dans la présente invention répondent à la formule (I) : 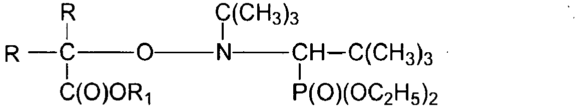 dans laquelle R représente un radical alkyle, linéaire ou ramifié, ayant un nombre d'atomes de carbone allant de 1 à 3, et R₁ représente un atome d'hydrogène, un métal alcalin tel que Li, Na, K ou NH₄⁺, Bu₄N⁺, Bu₃NH⁺.

### Art antérieur et problème technique

Les alcoxyamines répondant à la formule (I), décrites dans le document WO 04/014926, sont des amorceurs utilisés pour la polymérisation et la copolymérisation de tout monomère présentant une double liaison carbone-carbone susceptible de polymériser par voie radicalaire.

Différentes voies de synthèse sont connues de la littérature pour préparer des alcoxyamines. La méthode la plus courante implique le couplage d'un radical carboné avec un radical nitroxyde, en particulier selon la méthode mettant en jeu la réaction dite ATRA (Atom Transfer Radical Addition) décrite notamment dans le document WO 00/61544. Cette méthode consiste à faire réagir un nitroxyde avec un dérivé halogéné en présence d'un système organométallique, de préférence à base de cuivre. La réaction est réalisée dans un solvant organique non miscible à l'eau, de préférence les hydrocarbures aromatiques tels que le benzène, le toluène ou les xylènes, les chlorures d'alkyle tels que le dichlorométhane ou les éthers. La purification est réalisée par lavage de la phase organique avec de l'eau pouvant contenir un sel, tel que par exemple un sel d'ammonium, puis évaporation du solvant organique sous pression réduite.

Ce procédé présente l'inconvénient de produire des volumes importants d'effluents aqueux contenant des métaux, en particulier du cuivre, nécessitant des traitements ultérieurs coûteux et pénalisants pour la productivité. Typiquement, la préparation de l'acide 2-méthyl-2-[N-tertiobutyl-N-(diéthoxyphosphoryl-2,2diméthylpropyl) aminoxy] propionique mise en oeuvre dans les conditions décrites dans l'exemple 1 de la demande WO 04/014926 génère 60 litres d'effluents aqueux par kg d'alcoxyamine obtenue. Anachemiko et Al, macromolécules, 35(22), 8323-8329, 2002, et Organic & biomolecular chemistry 2(5), 709-715, code décrivent un procédé de synthèse d'alcocyamine dans l'acétone mais l'estraction de l'alcoxyamine se fait dans un solvant à l'aide d'une colonne de silice ou d'alumine qui est un procédé polluant et peu industriel.

Avianchenko et Al, macromolécules, 35(22), 8323-8329, 2002 et Organic & biomolecular chemistry 2(5), 709-715, 2004 décrivent un procédé de synthèse d'alcoxyamine dans l'acétone mais l'extraction de l'alcoxyamine se fait dans un solvant à l'aide d'une colonne de silice ou d'alumine qui est un procédé polluant et peu industriel.

Le problème à résoudre est de limiter les risques environnementaux liés aux effluents aqueux, notamment en réduisant leurs quantités, tout en maintenant les performances et la productivité du procédé, ou même mieux en les améliorant.

Il a maintenant été trouvé de façon surprenante qu'il est possible de préparer les alcoxyamines répondant à la formule (I) en effectuant la réaction d'ATRA dans un solvant organique miscible à l'eau. Grâce au choix du ligand du système organométallique et à la structure particulière de l'alcoxyamine, il est alors possible d'isoler très facilement l'alcoxyamine directement par précipitation par ajout d'une solution aqueuse acide. Ceci permet d'éviter les étapes fastidieuses de lavages à l'eau et ainsi de réduire la quantité d'effluent aqueux tout en augmentant la productivité.

### Exposé de l'invention

L'invention a donc pour objet un procédé de préparation d'alcoxyamines de formule (I) : 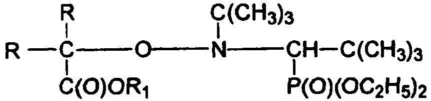 dans laquelle R représente un radical alkyle, linéaire ou ramifié, ayant un nombre d'atomes de carbone allant de 1 à 3, et R₁ représente un atome d'hydrogène, un métal alcalin tel que Li, Na, K ou NH₄⁺, Bu₄N⁺, Bu₃NH⁺, par réaction du nitroxyde de formule (II) : 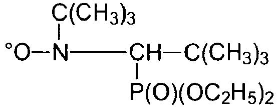 avec un composé halogéno-carboné de formule (III) 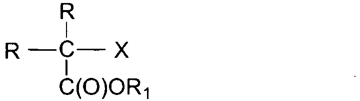 dans laquelle X représente un atome de chlore, de brome ou d'iode, de préférence un atome de brome, et R et R₁ ont la même signification que dans la formule (I), en présence d'un système organométallique MA(L)ₙ et/ou M(L)ₙ (IV) dans lequel M est un métal tel que Cu, Ag et/ou Au, de préférence Cu, A représente un atome d'halogène, un groupement carboxylate ou un groupement triflate, de préférence un atome de chlore ou un atome de brome, L représente un ligand du métal M, caractérisé en qu'il est mis en oeuvre dans un solvant organique miscible à l'eau et comprend les étapes suivantes :
a) on mélange sous agitation dans ledit solvant un sel métallique MA et/ou un métal M, le ligand L, le composé halogéno-carboné de formule (III) et le nitroxyde (II) selon un rapport molaire composé (III)/nitroxyde (II) allant de 1 à 1,5,
b) on maintient le milieu réactionnel sous agitation à une température allant de - 10°C à 60°C, jusqu'à disparition complète du nitroxyde (II),
c) on ajoute une solution aqueuse d'un acide fort de concentration allant de 5 à 40%,
d) on récupère l'alcoxyamine (I) précipitée à l'étape c) par filtration D'autres caractéristiques et avantages de l'invention apparaîtront à la lecture de l'exposé qui suit.

### Exposé détaillé de l'invention

Le procédé selon l'invention permet d'obtenir les alcoxyamines de formule (I) avec des cinétiques rapides et des rendements élevés dans des conditions douces de température et avec un rapport molaire composé halogéno-carboné (III) / nitroxyde (II) proche de la stoechiométrie, ladite alcoxyamine étant de plus précipitée directement dans le milieu réactionnel par ajout d'une solution aqueuse acide.

Selon la présente invention, comme solvant organique miscible à l'eau, on peut utiliser des solvants protiques, tels que les alcools comme le méthanol, l'éthanol, le propanol-1 ou le propanol-2, les glycols comme l'éthylène glycol, le diéthylène glycol, des solvants polaires aprotiques, tels que les éthers comme le tétrahydrofuranne(THF) ou le 1,4-dioxanne, les éthers de glycol comme le diéthylèneglycol diéthyléther, l'acétone, l'acétonitrile.

De façon préférée, le solvant utilisé est un alcool, notamment le méthanol.

De manière générale, on entend par « solvant organique miscible à l'eau », un solvant formant en toute proportion avec l'eau, un mélange homogène, monophasique et transparent.

Selon l'invention, le degré d'oxydation de l'espèce active du métal M est égal à 1 (M¹). Cette espèce active peut être ajoutée telle quelle au milieu réactionnel, de préférence sous forme d'un sel métallique MA, plus particulièrement un halogénure métallique tel que CuBr.

Selon une autre variante, on peut également introduire dans le milieu réactionnel un sel métallique MA dans lequel le métal M est au degré d'oxydation 1, et/ou le même métal M à l'état d'oxydation zéro (M°), le cuivre étant le métal préféré.

Dans une version particulière du procédé selon l'invention, le métal M, notamment le cuivre, est introduit dans le milieu réactionnel uniquement à l'état d'oxydation 0, ceci permettant de réduire de façon surprenante la quantité de ligand nécessaire.

Le ligand L est utilisé selon un rapport molaire L/M allant de 1 à 5 et, de préférence allant de 1 à 2.

Le ligand du métal L est choisi parmi les polyamines telles que :
- la tris[2-(diméthylamino)éthyl]amine : 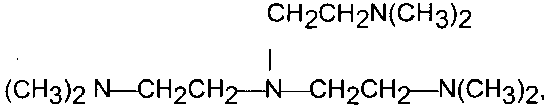
- la N, N, N', N', N" - pentaméthyldiéthylènetriamine (PMDETA) : 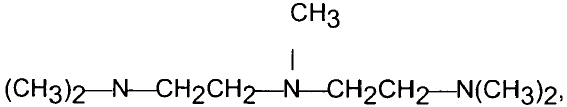
- la N,N,N',N'-tétraméthyléthylènediamine :

   (CH₃)₂-N-CH₂CH₂-CH₃)₂,
- la 1, 1, 4, 7, 10, 10-hexaméthyltriéthylènetétramine (HMTETA) : 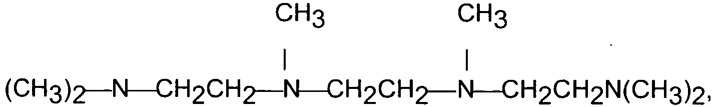 les polyamines cycliques telles que :
   - le 1,4,7-triméthyl-1,4,7-triazacyclononane,
   - le 1,5,9-triméthyl-1,5,9-triazacyclododécane,
   - le 1,4,8,11-tétraméthyl-1,4,8,11-tétraazacyclotétradécane.

On utilisera de préférence la PMDETA.

Le procédé selon l'invention consiste en général à mélanger à température ambiante dans le solvant organique miscible à l'eau, le sel métallique MA et/ou le métal M avec le ligand L, puis le nitroxyde (II) est ajouté à température ambiante. Le composé halogéno-carboné (III) avec un rapport molaire composé (III)/nitroxyde (II) allant de 1 à 1,5, de préférence de 1 à 1,1, est introduit à la température de réaction, comprise entre -10°C et 60°C, de préférence entre 5°C et 25°C.

On opère de préférence sous atmosphère de gaz inerte tel que l'azote ou l'argon et de préférence à pression atmosphérique.

Les durées de réaction sont en général très courtes. La fin de réaction peut être contrôlée par disparition des réactifs, notamment le nitroxyde, par exemple par des méthodes chromatographiques (CPG, HPLC, CCM).

La durée de la réaction est déterminée par la disparition complète du nitroxyde.

A la fin de la réaction, l'alcoxyamine (I) est précipitée dans le milieu organique par ajout d'une solution aqueuse d'un acide fort, tel que l'acide chlorhydrique. La concentration de la solution acide est en général de 5 à 40%, de préférence de 15 à 20%. Le pH final du milieu réactionnel peut aller de 0,5 à 3, de préférence de 1 à 2.

L'alcoxyamine (I) est récupérée par filtration. Eventuellement, elle peut être recristallisée par dissolution dans un solvant organique pouvant être le même que celui utilisé pour la réaction, puis précipitation à l'eau.

Le solvant organique miscible à l'eau peut être recyclé par distillation. Dans cette optique, on préférera des solvants ne faisant pas d'homo-azéotrope avec l'eau comme le méthanol.

Le procédé selon l'invention est particulièrement bien adapté pour la fabrication de l'alcoxyamine de formule (I) dans laquelle R est un radical méthyle et R₁ est un atome d'hydrogène, commercialisée par Arkema sous le nom BlocBuilder^{©}, conduisant à un volume réduit d'effluent aqueux, typiquement 8 à 10 litres/ kg d'alcoxyamine. Par ailleurs, la productivité est accrue, le gain se situant à la fois au niveau du temps de réaction/purification et du volume utilisable dans le réacteur.

Les exemples qui suivent illustrent l'invention.

### EXEMPLES

Les essais sont réalisés sous atmosphère de gaz inerte (argon ou azote) dans un réacteur en verre double-enveloppe de type Schott muni d'une agitation mécanique de type ancre, d'un réfrigérant, d'une ampoule de coulée, et d'une arrivée de gaz.

Le nitroxyde de formule (II), dénommé SG1, utilisé comme réactif a été préparé par oxydation du 2,2-diméthyl-1-(1,1-diméthylamino)propyl phosphonate de diéthyle avec l'acide peracétique selon le procédé décrit dans la demande EP1349862.

Le ligand de métal utilisé est la N,N,N',N',N"-pentaméthyldiéthylènetriamine, désignée ci-après PMDETA.

Les solvants utilisés, le méthanol, l'éthanol, l'isopropanol, l'acétone, l'acétonitrile, sont préalablement dégazés.

Les composés obtenus sont analysés par RMN du ¹H, du ¹³C et du ³¹P pour confirmation de la structure.

### Exemple 1 (solvant méthanol)

Dans un réacteur de 1 litre purgé à l'azote, on charge 200 ml de méthanol dégazé et 91,9 g de PMDETA (0,530 mol - 1,8 équivalents). En maintenant la température à 20-25°C, on introduit sous léger flux d'azote un mélange de 33,8 g de CuBr (0,236 mol - 0,8 équivalent) et de 5,6 g de poudre de cuivre (0,088 mol - 0,3 équivalent), puis 86,4 g de SG1 (0,294 mol - 1 équivalent). On refroidit à 5°C, puis on coule, sur une période de 15 minutes, 51,7 g d'acide 2-bromo-2-méthylpropionique (0,309 mol - 1,05 équivalents) dissous dans 100 ml de méthanol. A la fin de la coulée, on laisse réagir 30 minutes à 5°C.

En maintenant la température à 10-12°C, on ajoute 335 ml d'une solution aqueuse d'acide chlorhydrique à 18%. Le pH final du milieu réactionnel est de 1,8. On filtre pour récupérer l'alcoxyamine BlocBuilder^{®} brute. Le volume d'effluent contenant du cuivre est de 800 ml.

L'alcoxyamine est recristallisée par dissolution dans 330 ml de méthanol puis reprécipitation par ajout de 300 ml d'eau. Le produit est séché sous vide à 40°C. On obtient 94 g de poudre blanche (Rendement 84%) dont la pureté est vérifiée par analyse RMN par comparaison avec les données de la littérature.

### Exemple 2 (solvant méthanol)

Dans un réacteur de 250 ml purgé à l'azote, on charge 50 ml de méthanol dégazé et 22,2 g de PMDETA (0,128 mol - 1,8 équivalents). En maintenant la température à 20-25°C, on introduit, sous flux d'azote, un mélange de 8,2 g de CuBr (0,057 mol - 0,8 équivalent) et de 1,36 g de poudre de cuivre (0,021 mol - 0,3 équivalent), puis 21,1 g de SG1 (0,072 mol - 1 équivalent). A température ambiante, on coule goutte à goutte 12,5 g d'acide 2-bromo-2-méthylpropionique (0,075 mol - 1,05 équivalents) dissous dans 25 ml de méthanol, puis on laisse réagir 4 heures à température ambiante.

On refroidit à 10°C et on ajoute 110 ml d'une solution aqueuse d'acide sulfurique à 18%. Le pH final du milieu réactionnel est de 1. On filtre puis le gâteau est lavé à l'eau. Le produit est séché sous vide à 40°C. On obtient 23,3 g de poudre blanche (Rendement 85%). Les caractéristiques analytiques par RMN sont identiques à l'alcoxyamine obtenue dans l'exemple 1.

### Exemple 3 (solvant méthanol)

Dans un réacteur de 250 ml purgé à l'azote, on charge 50 ml de méthanol dégazé et 13,7 g de PMDETA (0,079 mol - 1,1 équivalents). En maintenant la température à 20-25°C, on introduit, sous flux d'azote, 5 g de poudre de cuivre (0,079 mol - 1,1 équivalent), puis 21,1 g de SG1 (0,072 mol - 1 équivalent). A température ambiante, on coule goutte à goutte 12,5 g d'acide 2-bromo-2-méthylpropionique (0,075 mol - 1,05 équivalents) dissous dans 25 ml de méthanol, puis on laisse réagir 4 heures à température ambiante.

On refroidit à 10°C et on ajoute 55 ml d'une solution aqueuse d'acide chlorhydrique à 18%. Le pH final du milieu réactionnel est de 1,5. On filtre, puis l'alcoxyamine est recristallisée par dissolution dans 80 ml de méthanol et reprécipitation par ajout de 120 ml d'eau. Le produit est séché sous vide à 40°C. On obtient 23,6 g de poudre blanche (Rendement 86%) dont les caractéristiques analytiques par RMN sont identiques à l'alcoxyamine obtenue dans l'exemple 1.

### Exemple 4 (solvant éthanol)

Dans un réacteur de 1 litre purgé à l'azote, on charge 200 ml d'éthanol dégazé et 104 g de PMDETA (0,600 mol - 2,2 équivalents). En maintenant la température à 20-25°C, on introduit, sous flux d'azote, 34,1 g de CuBr (0,238 mol - 0,9 équivalent) et 3,8 g de poudre de cuivre (0,060 mol - 0,2 équivalent), puis 79,2 g de SG1 (0,269 mol - 1 équivalent). On refroidit à 5°C et on coule goutte à goutte 50 g d'acide 2-bromo-2-méthylpropionique (0,299 mol - 1,1 équivalents) dissous dans 100 ml d'éthanol, puis on laisse réagir 4 heures à 5°C.

En maintenant la température à 5-10°C, on ajoute 340 ml d'une solution aqueuse d'acide chlorhydrique à 18%. On filtre, puis le gâteau est lavé avec 3x250 ml d'eau. Le produit est séché sous vide à 40°C. On obtient 87 g de poudre blanche correspondant à l'alcoxyamine de l'exemple 1, avec un rendement de 85%.

### Exemple 5 (solvant isopropanol)

Dans un réacteur de 2 L purgé à l'azote, on charge 200 ml d'isopropanol dégazé et 109 g de PMDETA (0,629 mol - 2,2 équivalents). En maintenant la température à 20-25°C, on introduit, sous flux d'azote, 32,8 g de CuBr (0,229 mol - 0,8 équivalent) et 5,4 g de poudre de cuivre (0,085 mol - 0,3 équivalent), puis 84,0 g de SG1 (0,285 mol - 1 équivalent). On refroidit à 5°C et on coule goutte à goutte 50 g d'acide 2-bromo-2-méthylpropionique (0,299 mol - 1,05 équivalents) dissous dans 100 ml d'isopropanol, puis on laisse réagir 4 heures à 5°C.

En maintenant la température à 10-12°C, on ajoute 710 ml d'une solution aqueuse d'acide chlorhydrique à 10%, puis 200 ml d'eau. On filtre puis le gâteau est lavé à l'eau. Le produit est séché sous vide à 40°C. On obtient 90 g de poudre blanche correspondant à l'alcoxyamine de l'exemple 1, avec un rendement de 82%.

### Exemple 6 (solvant acétone)

Dans un réacteur de 250 ml purgé à l'azote, on charge 50 ml d'acétone dégazée et 22,2 g de PMDETA (0,128 mol - 1,8 équivalents). En maintenant la température à 20-25°C, on introduit, sous flux d'azote, 8,2 g de CuBr (0,057 mol - 0,8 équivalent) et 1,4 g de poudre de cuivre (0,022 mol - 0,3 équivalent), puis 21,0 g de SG1 (0,071 mol - 1 équivalent). On refroidit à 5°C et on coule goutte à goutte 12,5 g d'acide 2-bromo-2-méthylpropionique (0,075 mol - 1,05 équivalents) dissous dans 25 ml d'acétone, puis on laisse réagir 4 heures à 5°C.

En maintenant la température à 10-12°C, on ajoute 80 ml d'une solution aqueuse d'acide chlorhydrique à 18%, puis 40 ml d'eau. On filtre puis le gâteau est lavé à l'eau. Le produit est séché sous vide à 40°C. On obtient 21,9 g de poudre blanche correspondant à l'alcoxyamine de l'exemple 1, avec un rendement de 81 %.

### Exemple 7 (solvant acétonitrile)

Dans un réacteur de 250 ml purgé à l'azote, on charge 50 ml d'acétonitrile dégazé et 22,2 g de PMDETA (0,128 mol - 1,8 équivalents). En maintenant la température à 20-25°C, on introduit, sous flux d'azote, 8,2 g de CuBr (0,057 mol - 0,8 équivalent) et 1,4 g de poudre de cuivre (0,022 mol - 0,3 équivalent), puis 21,0 g de SG1 (0,071 mol - 1 équivalent). On refroidit à 5°C et on coule goutte à goutte 12,5 g d'acide 2-bromo-2-méthylpropionique (0,075 mol - 1,05 équivalents) dissous dans 25 ml d'acétonitrile, puis on laisse réagir 4 heures à 5°C.

En maintenant la température à 10-12°C, on ajoute 80 ml d'une solution aqueuse d'acide chlorhydrique à 18%, puis 50 ml d'eau. On filtre puis l'alcoxyamine est recristallisée par dissolution dans 100 ml de méthanol et reprécipitation par ajout de 100 ml d'eau. Le produit est séché sous vide à 40°C. On obtient 21 g de poudre blanche correspondant à l'alcoxyamine de l'exemple 1, avec un rendement de 77%.

## Revendications

1. Procédé de préparation d'alcoxyamines de formule (I) : 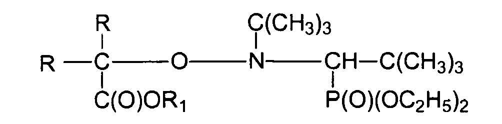 dans laquelle R représente un radical alkyle, linéaire ou ramifié, ayant un nombre d'atomes de carbone allant de 1 à 3, et R₁ représente un atome d'hydrogène, un métal alcalin tel que Li, Na, K ou NH₄⁺, Bu₄N⁺, Bu₃NH⁺,
par réaction du nitroxyde de formule (II) : 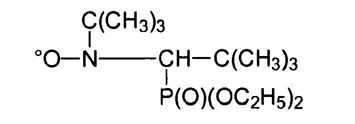 avec un composé halogéno-carboné de formule (III) 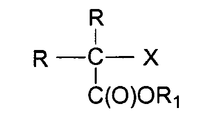 dans laquelle X représente un atome de chlore, de brome ou d'iode, de préférence un atome de brome, et R et R₁ ont la même signification que dans la formule (I),
en présence d'un système organométallique MA(L)ₙ et/ou M(L)ₙ (IV) dans lequel M est un métal tel que Cu, Ag et/ou Au, de préférence Cu, A représente un atome d'halogène, un groupement carboxylate ou un groupement triflate, de préférence un atome de chlore ou un atome de brome, L représente un ligand du métal M,
caractérisé en qu'il est mis en oeuvre sous atmosphère inerte dans un solvant organique formant en toute proportion avec l'eau, un mélange homogène, monophasique et transparent et comprenant les étapes suivantes :
a) on mélange sous agitation dans ledit solvant un sel métallique MA et/ou un métal M, le ligand L, le composé halogéno-carboné de formule (III) et le nitroxyde (II) selon un rapport molaire composé (III)/nitroxyde (II) allant de 1 à 1,5,
b) on maintient le milieu réactionnel sous agitation à une température allant de -10°C à 60°C, jusqu'à disparition complète du nitroxyde (II),
c) on ajoute une solution aqueuse d'un acide fort de concentration allant de 5 à 40%,
d) on récupère l'alcoxyamine (I) précipitée à l'étape c) par filtration.

2. Procédé selon la revendication 1 **caractérisé en ce que** le solvant organique miscible à l'eau est un solvant protique, tel qu'un alcool comme le méthanol, l'éthanol, le propanol-1 ou le propanol-2, un glycol comme l'éthylène glycol, le diéthylène glycol, un solvant polaire aprotique, tels que un éther comme le tétrahydrofuranne(THF) ou le 1,4-dioxanne, un éther de glycol comme le diéthylèneglycol diéthyléther, l'acétone, l'acétonitrile.

3. Procédé selon la revendication 1 ou 2 **caractérisé en ce que** le rapport molaire composé (III)/nitroxyde (II) va de 1 à 1,1.

4. Procédé selon l'une des revendications 1 à 3 **caractérisé en ce que** la température va de 5 à 25°C.

5. Procédé selon l'une des revendications 1 à 4 **caractérisé en ce que** le métal M, notamment le cuivre, est introduit dans le milieu réactionnel uniquement à l'état d'oxydation 0.

6. Procédé selon l'une des revendications 1 à 5 **caractérisé en ce que** l'alcoxyamine est l'acide 2-méthyl-2-[N-tertiobutyl-N-(diéthoxyphosphoryl-2,2diméthylpropyl) aminoxy] propionique.

## Claims

1. Process for the preparation of alkoxyamines of formula (I): 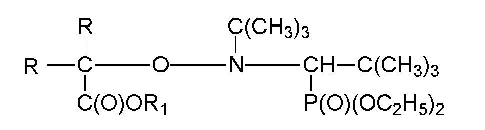 in which R represents a linear or branched alkyl radical having a number of carbon atoms ranging from 1 to 3 and R₁ represents a hydrogen atom, an alkali metal, such as Li, Na or K, or NH₄⁺, Bu₄N⁺ or Bu₃NH⁺,
by reaction of the nitroxide of formula (II): 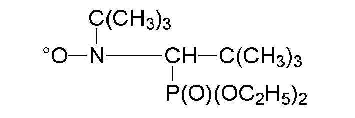 with a halocarbon compound of formula (III): 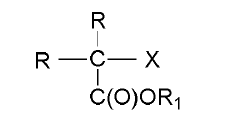 in which X represents a chlorine, bromine or iodine atom, preferably a bromine atom, and R and R₁ have the same meanings as in the formula (I),
in the presence of an organometallic system MA(L)ₙ and/or M(L)ₙ (IV),
in which M is a metal, such as Cu, Ag and/or Au, preferably Cu, A represents a halogen atom, a carboxylate group or a triflate group, preferably a chlorine atom or a bromine atom, L represents a ligand of the metal M,
**characterized in that** it is carried out under an inert atmosphere in an organic solvent forming, in all proportions with water, a homogeneous, single-phase and transparent mixture and comprises the following stages:
a) a metal salt MA and/or a metal M, the ligand L, the halocarbon compound of formula (III) and the nitroxide (II) are mixed with stirring in said solvent according to a compound (III)/nitroxide (II) molar ratio ranging from 1 to 1.5,
b) the reaction medium is kept stirred at a temperature ranging from -10°C to 60°C until the nitroxide (II) has completely disappeared,
c) an aqueous solution of a strong acid with a concentration ranging from 5 to 40% is added,
d) the alkoxyamine (I) precipitated in stage c) is recovered by filtration.

2. Process according to Claim 1, **characterized in that** the water-miscible organic solvent is a protic solvent, such as an alcohol, for example methanol, ethanol, 1-propanol or 2-propanol, or a glycol, such as ethylene glycol or diethylene glycol, or a polar aprotic solvent, such as an ether, for example tetrahydrofuran (THF), 1,4-dioxane or a glycol ether, for example diethylene glycol diethyl ether, acetone or acetonitrile.

3. Process according to Claim 1 or 2, **characterized in that** the compound (III)/nitroxide (II) molar ratio ranges from 1 to 1.1.

4. Process according to one of Claims 1 to 3, **characterized in that** the temperature ranges from 5 to 25°C.

5. Process according to one of Claims 1 to 4, **characterized in that** the metal M, in particular copper, is introduced into the reaction medium solely in the oxidation state O.

6. Process according to one of Claims 1 to 5, **characterized in that** the alkoxyamine is 2-methyl-2-[N-(tert-butyl)-N-(1-diethoxyphosphoryl-2,2-dimethylpropyl)aminoxy]propionic acid.

## Patentansprüche

1. Verfahren zur Herstellung von Alkoxyaminen der Formel (I): 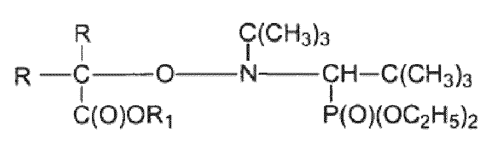 worin R für einen linearen oder verzweigten Alkylrest mit 1 bis 3 Kohlenstoffatomen steht und R₁ für ein Wasserstoffatom, ein Alkalimetall wie Li, Na, K oder NH₄⁺, Bu₄N⁺ oder Bu₃NH⁺ steht,
durch Reaktion des Nitroxids der Formel (II): 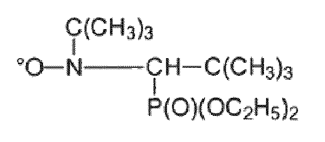 mit einer Halogenkohlenwasserstoffverbindung der Formel (III) 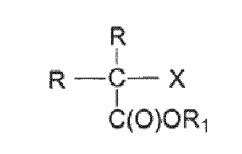 worin X für ein Chlor-, Brom- oder Iodatom, vorzugsweise ein Bromatom, steht und R und R₁ die gleiche Bedeutung wie in Formel (I) besitzen,
in Gegenwart eines metallorganischen Systems MA(L)ₙ und/oder M(L)ₙ (IV),
worin M für ein Metall wie Cu, Ag und/oder Au, vorzugsweise Cu, steht, A für ein Halogenatom, eine Carboxylatgruppe oder eine Triflatgruppe, vorzugsweise ein Chloratom oder ein Bromatom steht und L für einen Liganden des Metalls M steht, **dadurch gekennzeichnet, dass** es unter Inertatmosphäre in einem organischen Lösungsmittel, das in jedem Verhältnis mit Wasser eine homogene, einphasige und transparente Mischung bildet, durchgeführt wird und die folgenden Schritte umfasst:
a) ein Metallsalz MA und/oder ein Metall M, der Ligand L, die Halogenkohlenwasserstoffverbindung der Formel (III) und das Nitroxid (II) werden in einem Molverhältnis Verbindung (III)/Nitroxid (II) von 1 bis 1,5 unter Rühren in dem Lösungsmittel gemischt,
b) das Reaktionsmedium wird unter Rühren bei einer Temperatur von -10°C bis 60°C gehalten, bis das Nitroxid (II) vollständig verschwunden ist,
c) es wird eine wässrige Lösung einer starken Säure mit einer Konzentration im Bereich von 5 bis 40% zugegeben,
d) das in Schritt c) ausgefallene Alkoxyamin (I) wird durch Filtration gewonnen.

2. Verfahren nach Anspruch 1, **dadurch gekennzeichnet, dass** es sich bei dem mit Wasser mischbaren organischen Lösungsmittel um ein protisches Lösungsmittel wie einen Alkohol wie Methanol, Ethanol, 1-Propanol oder 2-Propanol, ein Glykol wie Ethylenglykol oder Diethylenglykol oder ein polares aprotisches Lösungsmittel wie einen Ether wie Tetrahydrofuran (THF) oder 1,4-Dioxan, einen Glykolether wie Diethylenglykoldiethylether, Aceton oder Acetonitril handelt.

3. Verfahren nach Anspruch 1 oder 2, **dadurch gekennzeichnet, dass** das Molverhältnis Verbindung (III)/Nitroxid (II) im Bereich von 1 bis 1,1 liegt.

4. Verfahren nach einem der Ansprüche 1 bis 3, **dadurch gekennzeichnet, dass** die Temperatur im Bereich von 5 bis 25°C liegt.

5. Verfahren nach einem der Ansprüche 1 bis 4, **dadurch gekennzeichnet, dass** das Metall M, insbesondere Kupfer, lediglich in der Oxidationsstufe 0 in das Reaktionsmedium eingetragen wird.

6. Verfahren nach einem der Ansprüche 1 bis 5, **dadurch gekennzeichnet, dass** es sich bei dem Alkoxyamin um 2-Methyl-2-[N-tert.-butyl-N-(di-ethoxyphosphoryl-2,2-dimethylpropyl)aminoxy]-propionsäure handelt.
